(19) Europäisches Patentamt
European Patent Office
Office européen des brevets

(11) **EP 3 530 161 B1**

(12) **EUROPÄISCHE PATENTSCHRIFT**

(45) Veröffentlichungstag und Bekanntmachung des Hinweises auf die Patenterteilung:
**05.08.2020   Patentblatt 2020/32**

(51) Int Cl.:
***A47J 43/07*** *(2006.01)*

(21) Anmeldenummer: **18157755.2**

(22) Anmeldetag: **21.02.2018**

(54) **SPEISENZUBEREITUNGSGERÄT MIT WERKZEUG ZUM ZERKLEINERN**

FOOD PREPARATION DEVICE WITH TOOL FOR GRINDING

APPAREIL DE PRÉPARATION D'ALIMENTS POURVU D'OUTIL DE BROYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.08.2019   Patentblatt 2019/35**

(73) Patentinhaber: **Vorwerk & Co. Interholding GmbH 42270 Wuppertal (DE)**

(72) Erfinder: **Frielinghaus, Robert 44799 Bochum (DE)**

(74) Vertreter: **Gille Hrabal Brucknerstrasse 20 40593 Düsseldorf (DE)**

(56) Entgegenhaltungen:
**DE-A1-102013 106 691     DE-A1-102016 110 710**

**Beschreibung**

Die Erfindung betrifft ein Speisenzubereitungsgerät mit einem Speisenzubereitungsgefäß, einem drehbaren Werkzeug zum Zerkleinern einer Speise in dem Speisenzubereitungsgefäß und einem Sensor insbesondere zur Gewichtsermittlung einer Speise in dem Speisenzubereitungsgefäß.

Beim Zerkleinern einer Speise mit harten Bestandteilen wie z.B. Eis, Schokolade oder Parmesan in einer Küchenmaschine oder einem Mixer wird üblicherweise bei der Vorgabe der benötigten Zerkleinerungszeit zum Erzielen eines gewünschten Zerkleinerungszustands auf Erfahrungswerte zurückgegriffen. Die vorgegebene Zeit für das Zerkleinern wird häufig in Rezepten angegeben wie z.B. in einem Rezept zur Zubereitung von Schokoladenpralinen oder zum Crushen von Eis. Bei einer Variation der Menge oder Eigenschaften der zu zerkleinernden Speisebestandteile wie Härte und Größenverteilung kann es zu einer überhöhten oder zu geringen Zerkleinerung verglichen mit dem gewünschten Zerkleinerungszustand kommen. Eine in oben beschriebener Weise fest vorgegebene Zerkleinerungszeit kann solche Variationen und Einflüsse gewöhnlich nicht berücksichtigen. Ferner entsteht durch eine unnötig lange Zerkleinerungszeit eine unnötig lange Lärmbelästigung.

Die Druckschrift EP2330955A1 offenbart eine Küchenmaschine, bei der durch drei Gewichtssensoren eine Unwucht bei Betrieb eines Rührwerks erfasst wird. Es wird ferner auf die Druckschriften DE102016110710A1 und DE102013106691A1 hingewiesen.

Es ist Aufgabe der Erfindung, ein weiterentwickeltes Speisenzubereitungsgerät bereitzustellen.

Zur Lösung der Aufgabe dienen ein Speisenzubereitungsgerät gemäß Anspruch 1 sowie ein Verfahren und ein Computerprogrammprodukt gemäß dem Nebenanspruch. Vorteilhafte Ausführungsformen ergeben sich aus den Unteransprüchen.

Zur Lösung der Aufgabe dient ein Speisenzubereitungsgerät mit einem Speisenzubereitungsgefäß, einem bevorzugt drehbaren Werkzeug zum Zerkleinern einer Speise in dem Speisenzubereitungsgefäß und einem Sensor. Vorzugsweise ist der Sensor zum Erfassen einer Messgröße beim Zerkleinern einer Speise durch das Werkzeug vorgesehen. Insbesondere ist der Sensor zur Gewichtsermittlung einer Speise in dem Speisenzubereitungsgefäß vorgesehen. Eine Steuerungseinheit ist vorgesehen und so eingerichtet, dass beim Zerkleinern einer Speise durch das Werkzeug die Steuerungseinheit auf Basis eines Sensorsignals des Sensors ermitteln kann, ob ein vorgegebener Zerkleinerungszustand der Speise erreicht ist. Beim Zerkleinern einer Speise meint während eines Zerkleinerungsvorgangs der Speise durch das Werkzeug.

Ein besonders reproduzierbares Ergebnis bei der Speisenzubereitung kann so auch bei relativ harten Speisebestandteilen bzw. Zutaten erzielt werden. Ferner wird eine weiterführende Automatisierung für die Zubereitung einer Speise mit dem Speisenzubereitungsgerät ermöglicht. Beispielsweise können so durch eine automatische Prozessparameteranpassung der tatsächliche Zustand und die tatsächliche Menge der zu zerkleinernden Speisebestandteile bzw. Zutaten berücksichtigt werden. Darüber hinaus können die Lärmbelästigung und der Energieverbrauch durch unnötig langes Zerkleinern besonders zuverlässig reduziert werden.

Wenn der Sensor ein Sensor zur Gewichtsermittlung ist, auch Gewichtssensor genannt, kann das Sensorsignal eines bestehenden, insbesondere integrierten Gewichtssensors des Speisenzubereitungsgeräts, der gewöhnlich zum Wiegen der Speise in dem Speisenzubereitungsgefäß eingesetzt wird, zusätzlich für die Ermittlung des Erreichens des vorgegebenen Zerkleinerungszustands genutzt werden. Grundsätzlich erfolgt auch die gewöhnliche Gewichtsermittlung auf Basis des Sensorsignals des Sensors zur Gewichtsermittlung, das mit dem zu ermittelnden Gewicht insbesondere im ruhenden Zustand des Speisenzubereitungsgerätes korreliert.

Eine Messgröße ist insbesondere eine physikalische Eigenschaft. Vorzugsweise können sich in der Messgröße abrupte Springbewegungen und/oder Rüttelbewegungen aus Bewegungsimpulsen durch die Werkzeugkollisionen mit harten Speisebestandteilen wiederspiegeln, die normalerweise zu krachenden akustischen Geräuschen und Lärmemissionen führen. Derart abrupte Bewegungsimpulse entstehen beim Zerkleinern einer weichen oder bereits hinreichend zerkleinerten Speise grundsätzlich nicht.

In einer Ausgestaltung ist die Messgröße akustischer Schall, der Schallpegel, der Schalldruckpegel oder die Lautstärke, die z.B. in Dezibel (dB) ausgedrückt werden kann. Die Messgröße kann dann durch ein Mikrofon erfasst werden. Durch das Auftreffen des Werkzeugs auf harte Speisebestandteile wird eine akustische Emission erzeugt, die eine hohe Lautstärke haben kann. Die Zerkleinerungsgeräusche nehmen ab, wenn alle großen Stücke harter Speisebestandteile in Reichweite des Werkzeugs verarbeiten bzw. zerkleinert sind. In einer Ausgestaltung ist die Messgröße der Motorstrom. Die Messgröße kann dann durch einen Motorstrommesser erfasst oder durch eine Motorsteuerung bereitgestellt werden. Der Motorstrom, mit dem der Elektromotors zum Antreiben des Werkezugs versorgt wird, ist von der Last auf den Elektromotor abhängig. Die Last auf den Motor steigt durch das Auftreffen des Werkzeugs auf harte Speisebestandteile an und nimmt mit zunehmendem Zerkleinerungsgrad ab. In einer Ausgestaltung ist die Messgröße eine Beschleunigung. Die Messgröße kann dann durch einen Beschleunigungssensor oder Gewichtssensor erfasst werden. Beim Auftreffen des Werkzeugs auf einen harten Speisebestandteil kann es zu einem teilweisen Rückprall des Werkzeugs und/oder zu einem Ablenken des Werkzeugs nach oben oder unten kommen. Es entstehen so Bewegungsimpulse, die zu abrupten Beschleunigungsänderungen führen können. Diese Bewegungsimpulse können beispielsweise über das Drehlager des Werkzeugs auf das gesamte Speisenzubereitungsgerät übertragen werden, so dass es zu abrupten Spring- und/oder Rüttelbewegungen relativ zum Untergrund kommt. In einer Ausgestaltung ist der Sensor ein akustischer Sensor, ein Mikrofon oder ein Tonaufnehmer. Bevorzugt ist der Sensor insbesondere in dieser Ausgestaltung unmittelbar an dem Speisenzubereitungsgefäß oder am Gehäuse des Speisenzubereitungsgeräts angebracht. In einer Ausgestaltung ist der Sensor ein Motorstrommesser. In einer Ausgestaltung ist der Sensor ein Beschleunigungssensor. Vorzugsweise ist der Sensor unmittelbar am Werkzeug, am Speisenzubereitungsgefäß oder am Gehäuse des Speisenzubereitungsgerätes angebracht.

In einer Ausführungsform ist die Steuerungseinheit so eingerichtet, dass ein Hinweis an den Benutzer ausgegeben wird, wenn die Steuerungseinheit auf Basis des Sensorsignals ermittelt hat, dass ein vorgegebener Zerkleinerungszustand der Speise erreicht ist. Dem Benutzer wird so ermöglicht, selber zu entscheiden, ob er den Zerkleinerungsvorgang wie vorgeschlagen beendet oder z.B. zur individuellen Anpassung eines Rezepts von dem Vorschlag abweicht und für einen höheren Zerkleinerungsgrad länger zerkleinert. Insbesondere weist der Hinweis darauf hin, dass das Werkzeug angehalten werden kann. Vorzugsweise wird der Hinweis über einen Display visuell und/oder akustisch über einen Lautsprecher ausgegeben.

In einer Ausführungsform ist die Steuerungseinheit so eingerichtet, dass ein Prozessparameter zur Speisenzubereitung automatisch angepasst wird, wenn die Steuerungseinheit auf Basis des Sensorsignals ermittelt hat, dass ein vorgegebener Zerkleinerungszustand der Speise erreicht ist. Ein besonders hoher Automatisierungsgrad und reproduzierbares Kochergebnis können so erhalten werden. Ein Prozessparameter zur Speisenzubereitung ist insbesondere eine Drehstufe des Werkzeugs, die Drehzahl des Werkzeugs, die Aktivierung oder Deaktivierung des Werkzeugs, die restliche Zerkleinerungsdauer, eine Kochtemperatur und/oder eine Garzeit. Die Drehstufe kann innerhalb eines Stufenrasters wie z.B. 1 bis 10 eingestellt werden. Für jede Drehstufe ist eine bestimmte Soll-Drehzahl für das Werkzeug festgelegt. Ein gewünschter Zerkleinerungsgrad kann mit der Drehstufe näherungsweise korrelieren, d.h., je höher die Drehstufe, desto höher ist der gewünschte Zerkleinerungsgrad. Die Drehstufe kann allgemein durch den Benutzer und/oder die Steuerungseinheit eingestellt werden. Ein Deaktivieren des Werkzeugs führt zum Anhalten des Werkzeugs. Eine restliche Zerkleinerungsdauer kann als Sicherheitspuffer vorgesehen werden, damit mit besonders großer Sicherheit alle Stücke zerkleinert sind. Bevorzugt ist vorliegend keine restliche Zerkleinerungsdauer vorgesehen. Zum Steuern der Kochtemperatur ist bevorzugt ein Thermoelement zum Erhitzen einer Speise in dem Speisenzubereitungsgefäß vorgesehen. Bei geringerem Zerkleinerungsgrad kann so beispielsweise die Kochtemperatur erhöht oder die Garzeit verlängert werden.

In einer Ausführungsform ist die Steuerungseinheit so eingerichtet, dass das Werkzeug automatisch angehalten wird, wenn die Steuerungseinheit auf Basis des Sensorsignals ermittelt hat, dass ein vorgegebener Zerkleinerungszustand der Speise erreicht ist. Ein unnötiger Energieverbrauch und eine unnötige Lärmbelästigung können so vermieden werden. Anhalten des Werkzeugs bedeutet allgemein, dass das Werkzeug nicht mehr für ein Drehen angetrieben wird, so dass Reibwiderstände das Werkzeug verlangsamen und zum Anhalten führen. Ein automatisches Anhalten des Werkzeugs kann besonders einfach umgesetzt werden, indem die Steuerungseinheit das Werkzeug oder den Antrieb für das Werkzeug deaktiviert oder dem Antrieb eine Null-Drehzahl als Solldrehzahl vorgibt.

In einer Ausführungsform ist der vorgegebene Zerkleinerungszustand durch eine Überwachungsschwelle definiert. Es kann so steuerungstechnisch besonders einfach durch die Steuerungseinheit ermittelt werden, ob ein vorgegebener Zerkleinerungszustand der Speise erreicht ist. Eine Überwachungsschwelle ist ein bevorzugt digitaler Wert, der in der Steuerungseinheit gespeichert ist. Dieser Wert kann beispielsweise in einem Algorithmus genutzt werden, oder im Rahmen eines Ermittlungsprozesses wird auf den Wert zugegriffen. In einer Ausführungsform ist die Steuerungseinheit so eingerichtet, dass die Überwachungsschwelle in Abhängigkeit von einem gewählten Rezept vorgegeben wird, insbesondere durch die Steuerungseinheit oder durch den Benutzer. Ein besonders präzises Ermitteln des Erreichens eines gewünschten Zerkleinerungszustands wird so erzielt. Insbesondere kann die Steuerungseinheit dazu auf ein gewähltes Rezept zugreifen oder der Benutzer kann die Überwachungsschwelle nach Rezeptvorgabe einstellen. Da bei einem Rezept die Zutaten bekannt sind, kann durch Berücksichtigung von allgemeinen Charakteristika im Signalverlauf beim Zerkleinern einer bestimmten Zutat oder Speise die Überwachungsschwelle besonders präzise festgelegt werden. Es kann so erreicht werden, dass der Zerkleinerungsvorgang besonders präzise, also in diesem Fall zeitnah, genau dann beendet wird, wenn die Speise gerade genug zerkleinert ist, also der Zerkleinerungsgrad wie gewünscht ist. In einer Ausgestaltung nutzt die Steuerungseinheit eine Messgröße zur Festlegung oder Anpassung der Überwachungsschwelle, bevorzugt kontinuierlich während des Zerkleinerungsvorgangs. Eine besonders präzise Funktionsweise wird so ermöglicht.

In einer Ausführungsform ist die Steuerungseinheit so eingerichtet, dass beim Zerkleinern einer Speise durch das Werkzeug die Steuerungseinheit auf Basis eines Überwachungswertes ermittelt, ob ein vorgegebener Zerkleinerungszustand der Speise erreicht ist. Ein besonders präzises Ermitteln des Erreichens eines gewünschten Zerkleinerungszustands wird so erzielt. Ein Überwachungswert ist ein bevorzugt digitaler Wert, der durch die Steuerungseinheit verarbeitet werden kann. Der Überwachungswert kann beispielsweise in einem Algorithmus genutzt werden, oder im Rahmen eines Ermittlungsprozesses wird auf den Überwachungswert zugegriffen. Insbesondere kann der Überwachungswert bevorzugt kontinuierlich mit der Überwachungsschwelle verglichen werden, um ein Überwachungsergebnis in Bezug auf den vorgegebenen Zerkleinerungszustand der Speise in dem Speisenzubereitungsgefäß zu erhalten.

In einer Ausführungsform ist das Sensorsignal der Überwachungswert. Der Aufwand für eine Signalvorverarbeitung kann so eingespart werden. Das insbesondere analoge Sensorsignal wird dann als als Überwachungswert genutzt. Eine Überwachung des Überwachungswertes kann analog erfolgen, insbesondere unter Berücksichtigung der Überwachungsschwelle.

In einer Ausführungsform ist die Steuerungseinheit so eingerichtet, dass die Steuerungseinheit auf Basis des Sensorsignals nur eines Sensors den Überwachungswert berechnet. Eine besonders einfach aufgebaute und steuerbare Überwachung kann so realisiert werden. Insbesondere genügt nur ein Gewichtssensor, nur ein akustischer Sensor oder nur ein Beschleunigungssensor, um zuverlässig ermitteln zu können, ob ein vorgegebener Zerkleinerungszustand der Speise erreicht ist. Alternativ oder ergänzend ist die Steuerungseinheit so eingerichtet, dass die Steuerungseinheit auf Basis der Sensorsignale mehrerer Sensoren den Überwachungswert berechnet. Beispielsweise kann mittels mehrerer Gewichtssensoren ein Gesamtgewicht einer Speise oder des Speisenzubereitungsgefäßes mit oder ohne darin enthaltener Speise ermittelt werden und dieses Gesamtgewicht als Überwachungswert genutzt werden. Der Überwachungswert kann alternativ oder ergänzend eine Berechnungsgröße sein, die durch einen Berechnungsalgorithmus bestimmt wird, der auf Basis des Sensorsignals eines Gewichtssensors und eines anderen Sensors, z.B. eines akustischen Sensors, den Überwachungswert ermittelt. Durch die Einbeziehung verschiedenartiger Sensoren für unterschiedliche Messgrößen kann ein besonders zuverlässiges und präzises Ermitteln des Zerkleinerungszustands der Speise in dem Speisenzubereitungsgefäß erzielt werden.

In einer Ausführungsform ist der Überwachungswert ein Streuungsmaß, insbesondere ein mitlaufendes Streuungsmaß. Ein besonders zuverlässiges und präzises Ermitteln des Zerkleinerungszustands der Speise in dem Speisenzubereitungsgefäß kann so erzielt werden. Ein Streuungsmaß ist ein Maß für die Streuungsbreite einer variablen Größe. Die variable Größe kann das Sensorsignal nur eines Sensors sein. Die variable Größe kann aus den Sensorsignalen von mehreren baugleichen und/oder andersartigen Sensoren berechnet sein. Die variable Größe kann das Ergebnis einer Signalfilterung und/oder Signalvorverarbeitung sein. Der Fachausdruck "mitlaufend", auch "gleitend" genannt, bedeutet gemittelt über eine vorgegebene und/oder konstante Anzahl von Werten der variablen Größe, die in einer bestimmten Reihenfolge hintereinander innerhalb eines Fensters vorliegen. Das Fenster kann durch die maximale Anzahl der Werte oder durch eine Zeitspanne definiert sein. Beispielsweise umfasst das Fenster maximal 15 Sensorsignale, die nacheinander von einem Sensor übermittelt wurden. Im Betrieb wird das Fenster überlappend verschoben, d.h., wenn ein neuer Wert in der Reihenfolge als letztes hinzukommt, wird ein erster Wert gemäß der Reihenfolge aus dem betrachteten Fenster gestrichen. Eine zeitliche Glättung des Streuungsmaßes kann durch das Vorsehen eines mitlaufenden Überwachungswertes ermöglicht werden.

In einer Ausgestaltung ist der Überwachungswert eine Abweichung der variablen Größe von einem insbesondere mittlaufenden Mittelwert der variablen Größe. Alternativ oder ergänzend wird ein modellbasierter Algorithmus zur Berechnung des Überwachungswerts eingesetzt. In einer Ausgestaltung entspricht der Überwachungswert der Varianz. Varianz wird allgemein mit "Var" symbolisiert und entspricht $\sigma^2$, also die Standardabweichung Sigma zum Quadrat. Bevorzugt ist der Überwachungswert die mitlaufende Varianz, auch gleitende Varianz genannt, die sich durch Quadrieren der mitlaufenden Standardabweichung ergibt. In einer Ausgestaltung entspricht der Überwachungswert einer 3s gleitenden Standardabweichung.

In einer Ausführungsform ist der Überwachungswert ein Gewichtswert mit einer Information über das Gewicht einer Speise in dem Speisenzubereitungsgefäß. Ein Gewichtswert mit einer Information über das Gewicht einer Speise in dem Speisenzubereitungsgefäß kann mit dem Gewicht der Speise in dem Speisenzubereitungsgefäß korrelieren, insbesondere im ruhenden Zustand des Speisenzubereitungsgeräts. Im ruhenden Zustand des Speisenzubereitungsgeräts ist das Werkzeug angehalten und das Speisenzubereitungsgerät ist in vorgesehener Weise abgestellt, wobei keine den Gewichtswert nennenswert beeinflussenden äußeren oder inneren Kräfte auf das Speisenzubereitungsgerät einwirken. Eine beeinflussende, äußere Kraft kann z.B. durch ein Herunterdrücken des Speisenzubereitungsgeräts oder ein Abstellen eines Gegenstands auf dem Speisenzubereitungsgerät durch den Benutzer entstehen. Eine beeinflussende, innere Kraft kann z.B. durch dynamische Speisenumwandlungsprozesse wie kochend brodelndes Wasser oder das Aufpoppen von Popcorn entstehen.

In einer Ausführungsform ist die Steuerungseinheit so eingerichtet, dass die Steuerungseinheit ermittelt, d.h. detektiert, dass der vorgegebene Zerkleinerungszustand der Speise erreicht ist, wenn der Überwachungswert die Überwachungsschwelle erreicht. Eine Überwachung bzw. Detektion mit besonders geringem Steuerungsaufwand kann so ermöglicht werden. Zum Zeitpunkt des Ermittelns des Erreichens des vorgegebenen Zerkleinerungszustands der Speise kann dann als Überwachungsergebnis festgestellt werden, dass der gewünschte Zerkleinerungszustand erreicht ist. Bevorzugt ist die Steuerungseinheit so eingerichtet, dass das Erreichen ein Unterschreiten ist, also ein Erreichen der Überwachungsschwelle durch fallende Überwachungswerte. Das Risiko einer Fehldetektion kann so verringert werden, insbesondere wenn der Überwachungswert ein Streuungsmaß ist. In einer Ausgestaltung ist vorgesehen, dass die Steuerungseinheit ein Überwachungsergebnis erzeugt, das beispielsweise zum Ausführen eines Vorgangs führt, wenn die Steuerungseinheit ermittelt, dass der vorgegebene Zerkleinerungszustand der Speise erreicht ist.

In einer Ausführungsform ist die Steuerungseinheit so eingerichtet, dass die Steuerungseinheit ermittelt, also detektiert, dass der vorgegebene Zerkleinerungszustand der Speise erreicht ist, wenn der Überwachungswert die Überwachungsschwelle unterschreitet und anschließend für eine vorgegebene Zeitdauer unterhalb der Überwachungsschwelle bleibt. Ein besonders zuverlässiges Detektieren des Erreichens eines gewünschten Zerkleinerungszustands der Speise in dem Speisenzubereitungsgefäß kann so erzielt werden. Es kann vorkommen, dass sich einzelne, große Stücke der Speise vorübergehend außerhalb der Reichweite des Werkzeugs innerhalb des Speisenzubereitungsgefäßes aufhalten, z.B. durch mehrfaches Auftreffen von oben auf eine flache Werkzeugseite. Der Überwachungswert, z.B. ein Wert in Form eines Streuungsmaßes, könnte in einem solchen Spezialfall kurzzeitig unter die Überwachungsschwelle fallen, bis das Werkzeug das besagte Stück zerkleinert, was sich wiederum in der Überwachungsgröße niederschlägt, so dass der Überwachungswert die Überwachungsschwelle wieder überschreitet. Durch Vorsehen der vorgegebenen Zeitdauer des Überwachungswertes unterhalb der Überwachungsschwelle kann besonders zuverlässig auch im oben beschriebenen Spezialfall ein besonders präzises Erreichen des gewünschten Zerkleinerungszustands ohne das Vorhandsein einzelner, größerer Stücke ermöglicht werden.

In einer Ausgestaltung wird die Zeitdauer in Abhängigkeit von einem gewählten Rezept oder von einer Benutzereinstellung bezüglich des vom Benutzer gewünschten Zerkleinerungsergebnisses oder Konfidenzlevels vorgegeben.

In einer Ausführungsform ist der mindestens eine Sensor in einem Stützelement zum Tragen des Gewichts des Speisenzubereitungsgefäßes und/oder des Speisenzubereitungsgerätes angeordnet, bevorzugt integriert. Eine besonders kompakte Bauweise und gleichzeitig eine besonders präzise Messung sowohl des Gewichts im ruhenden Zustand als auch der beim Zerkleinern von harten Speisenbestandteilten erzeugten Bewegungsenergie können so erzielt werden. Insbesondere ist das Stützelement ein Standfuß. Bevorzugt sind mindestens zwei, bevorzugt genau drei und/oder höchstens fünf vorzugsweise baugleiche Sensoren vorgesehen, insbesondere Gewichtssensoren.

Ein weiterer Aspekt der Erfindung betrifft ein Verfahren zum Detektieren eines vorgegebenen Zerkleinerungszustands einer Speise in einem Speisenzubereitungsgefäß während dessen Zerkleinerung durch ein insbesondere drehbares Werkzeug eines Speisenzubereitungsgeräts, welches das Speisenzubereitungsgefäß umfasst, wobei durch einen Sensor insbesondere zur Gewichtsermittlung der Speise in dem Speisenzubereitungsgefäß ein Sensorsignal an eine Steuerungseinheit des Speisenzubereitungsgeräts übermittelt wird und die Steuerungseinheit beim Zerkleinern der Speise durch das Werkzeug auf Basis des Sensorsignals ermittelt, ob ein vorgegebener Zerkleinerungszustand der Speise erreicht ist. Der vorgegebene Zerkleinerungszustand ist beispielsweise durch mindestens einen Parameter spezifiziert, der bevorzugt in der Steuerungseinheit speicherbar ist und/oder grundsätzlich mit einem bestimmten Konfidenzlevel dem gewünschten tatsächlichen Zerkleinerungszustand entsprechen kann. Die Merkmale, Ausführungsformen und Wirkungen des eingangs beschriebenen Speisenzubereitungsgeräts zur Lösung der Aufgabe können auch auf dieses Verfahren übertragen und angewendet werden.

Ein weiterer Aspekt der Erfindung betrifft ein Computerprogrammprodukt, das Befehle umfasst, die bei der Ausführung des Programms des Computerprogrammprodukts durch eine Steuerungseinheit die Steuerungseinheit dazu veranlassen, die Schritte des Verfahrens nach dem vorhergehenden Aspekt der Erfindung auszuführen. Die Merkmale, Ausführungsformen und Wirkungen des eingangs beschriebenen Speisenzubereitungsgeräts zur Lösung der Aufgabe beziehen sich entsprechend auch auf dieses Computerprogrammprodukt. Insbesondere umfasst die Steuerungseinheit einen Prozessor und einen Speicher. Auf dem Speicher ist üblicherweise das Programm, d.h., auf dem Speicher speicherbare Befehle bzw. ein Computer-Programm-Code gespeichert. Der Prozessor, der Speicher und der Computer-Programm-Code sind so konfiguriert, dass ein Verfahren mit mehreren Verfahrensschritten durchgeführt werden kann. Durch Verfahrensschritte kann beispielsweise ein Ermitteln oder Berechnen realisiert werden.

Nachfolgend werden Ausführungsbeispiele der Erfindung auch anhand von Figuren näher erläutert. Merkmale der Ausführungsbeispiele und weiterer nachfolgend beschriebener alternativer oder ergänzender Ausgestaltungen können einzeln oder in einer Mehrzahl mit den beanspruchten Gegenständen kombiniert werden. Die beanspruchten Schutzbereiche sind nicht auf die Ausführungsbeispiele beschränkt.

Es zeigen:

Figur 1: Schematische Darstellung eines Speisenzubereitungsgeräts beim Zerkleinern einer Speise mit einem Werkzeug, wobei das Speisenzubereitungsgefäß im Längsschnitt dargestellt ist;

Figur 2: Darstellung eines Messdiagramms mit einer Überwachungsschwelle und einer Messkurve des Sensorsignals und einer Messkurve des aus dem Sensorsignal berechneten Überwachungswertes;

Figur 3a: Darstellung eines Messdiagramms mit einer Überwachungsschwelle und mehreren Messkurven von Überwachungswerten aus verschiedenen Zerkleinerungsvorgängen einer Speise;

Figur 3b: Fotografische Abbildung und eine dazu korrespondierende schematische Darstellung einer Draufsicht in das Speisenzubereitungsgefäß am Ende des Zerkleinerungsvorgangs der Speise gemäß der Messkurve K1 der Figur 3a;

Figur 3c: Fotografische Abbildung und eine dazu korrespondierende schematische Darstellung einer Draufsicht in das Speisenzubereitungsgefäß am Ende des Zerkleinerungsvorgangs der Speise gemäß der Messkurve K4 der Figur 3a;

Figur 4: Darstellung eines Messdiagramms mit einer Überwachungsschwelle und mehreren Messkurven von Überwachungswerten aus verschiedenen Zerkleinerungsvorgängen zum Zubereiten von Slushie-Eis aus Eiswürfeln.

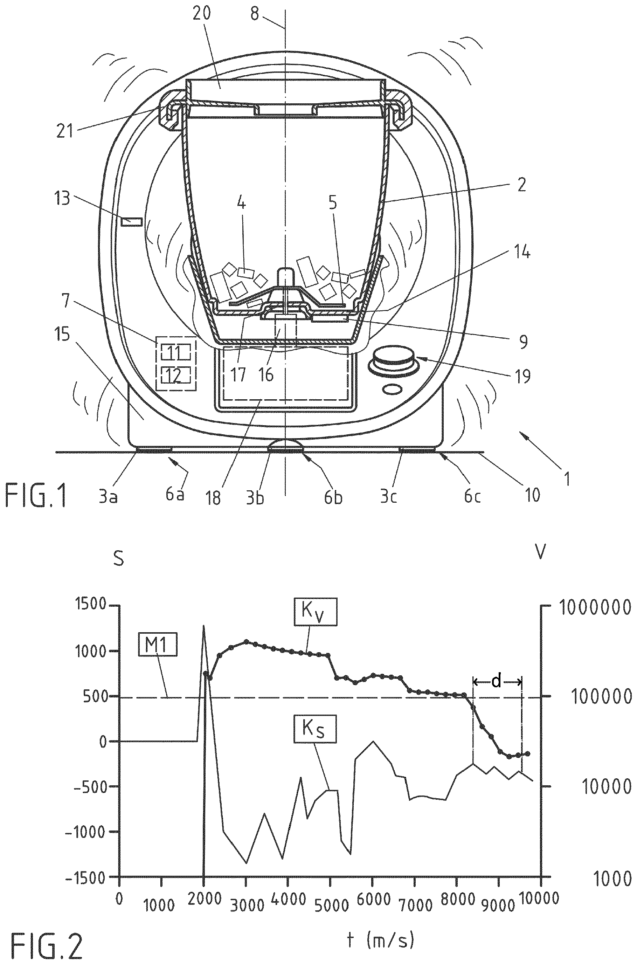

Die Figur 1 zeigt ein Speisenzubereitungsgerät 1 beim Zerkleinern einer Speise 4 mit grobstückigen Speisebestandteilen in einem Speisenzubereitungsgefäß 2 mit einem Werkzeug 5. Ein nicht dargestellter Elektromotor kann über eine Antriebswelle 16 das Werkzeug 5 für ein Drehen um die Drehachse 8 antreiben. Insbesondere ist die Antriebswelle 16 durch eine Gefäßdurchführung 17 im Gefäßboden 14 des Speisenzubereitungsgefäßes 2 von außen nach innen geführt, um das Werkzeug 5 im Inneren des Speisenzubereitungsgefäßes 2 zu drehen. Auf diese Weise kann das Werkzeug 5 mit hohen Drehzahlen von beispielsweise 5.000 U/min oder 10.000 U/min vibrationsarm betrieben werden. Mittels einer nicht näher dargestellten Dichtungseinrichtung wird der Gefäßboden 14 mit der durchgeführten Antriebswelle 16 flüssigkeitsdicht abgedichtet. Bevorzugt weist das Werkzeug 5 einen oder mehrere radiale Werkzeugarme insbesondere mit einer Klinge auf. Erfindungsgemäß ist das Werkzeug 5 ein Mixmesser. Insbesondere ist das Speisenzubereitungsgerät 1 eine elektrische Küchenmaschine vorzugsweise mit einem Heizelement 9 zum Erhitzen der Speise 5 in dem Speisenzubereitungsgefäß 2. Die Speisenzubereitungsvorrichtung kann grundsätzlich auch ein Mixer oder ein Kochautomat sein. Zur Speisenzubereitung wird eine Speise 4 bzw. eine Zutat von oben in das Speisenzubereitungsgefäß 2 gegeben und das Speisenzubereitungsgefäß 2 mit einem Deckel 20 abgedeckt, der durch eine Verriegelungseinrichtung 21 verriegelt werden kann. Zum Zerkleinern kann der Benutzer mit dem Drehknopf 19 eine Drehstufe für das Werkzeug 5 einstellen, die beispielsweise durch ein Rezept vorgegeben oder empfohlen werden kann. Beim Zerkleinern der harten Speisebestandteile kommt es wie in Figur 1 angedeutet zu Werkzeugkollisionen, die zu krachenden akustischen Geräuschen und Lärmemissionen führen und durch die das gesamte Speisenzubereitungsgerät 1 in abrupte Springbewegungen und/oder Rüttelbewegungen versetzt werden kann. Wenn ein Gleichgewicht aus der Größe der harten Speisebestandteile und der Drehzahl des Werkzeugs 5 erreicht ist, kommt es grundsätzlich zu keinen derartig abrupten Bewegungsimpulsen mehr oder die Intensität solcher abrupten Bewegungsimpulse ist auf ein unauffälliges Maß reduziert. Die Drehgeschwindigkeit des Werkzeugs 5 ist dann nicht mehr hoch genug für ein Zerteilen eines durch die Masseträgheit ruhenden harten Speisebestandteils, sondern kann allgemein die harten Speisebestandteile vielmehr verdrängen und mischen. Insbesondere aus diesem Grund ist der Zerkleinerungsgrad oder Mahlgrad normalerweise abhängig von der Drehzahl des Werkzeugs, der wiederum durch den Benutzer über die oben erwähnte Drehstufe eingestellt werden kann. Der gewünschte Zerkleinerungszustand kann also dem für eine bestimmte Drehstufe typischen Zerkleinerungszustand entsprechen. Beim Zerkleinern oder Mischen von weichen Speisebestandteilen wie z.B. dem Pürieren von gekochten Kartoffeln oder Obst können ebenfalls Bewegungen des Speisenzubereitungsgeräts 1 entstehen, wenn z.B. noch wenig zerkleinerte weiche Speisebestandteile ungleichmäßig verteilt durch das drehende Werkzeug in Rotation versetzt werden. Diese Bewegungen sind jedoch grundsätzlich nicht abrupt und führen auch normalerweise nicht zu krachenden Geräuschen.

Das Gewicht des Speisenzubereitungsgeräts 1 mit einem Gehäuse 15, dem in das Gehäuse 15 einsetzbaren Speisenzubereitungsgefäß 1 und einer eventuell darin enthaltenen Speise 4 wird von mindestens einem Stützelement 6a, 6b, 6c vorzugsweise in Form eines Standfußes aufgenommen. Insbesondere sitzt das gesamte Speisenzubereitungsgerät 1 wie in Figur 1 gezeigt auf genau drei Stützelementen 6 auf einem Untergrund 10 auf. In einer Ausgestaltung ist wie in Figur 1 gezeigt in jedem der Stützelemente 6a, 6b, 6c jeweils ein Sensor 3a, 3b, 3c zur Gewichtsermittlung integriert, durch die gemeinsam folglich das Gesamtgewicht des Speisenzubereitungsgeräts 1, des Speisenzubereitungsgefäßes 1 und/oder der Speise 4 gemessen bzw. ermittelt werden kann. Da ein oben beschriebener abrupter Bewegungsimpuls, insbesondere dessen Anteil in Schwerkraftrichtung, ebenfalls auf den mindestens einen Sensor 3a, 3b, 3c zur Gewichtsermittlung wirkt, kann der abrupte Bewegungsimpuls durch den Sensor 3a, 3b, 3c zur Gewichtsermittlung erfasst werden. Einem bestehenden und insbesondere bereits integriertem Sensor 3a, 3b, 3c zur Gewichtsermittlung kann auf diese Weise eine Doppelfunktion zukommen. Zusätzliche Sensoren können eingespart werden. Gleichsam können auch Bestandsgeräte mit der Funktion des Ermittelns des Endpunktes eines Zerkleinerungsvorgangs durch ein bloßes Softwareupdate aufgerüstet werden.

Exemplarisch ist in Figur 1 ein weiterer Sensor 13 zur Erfassung von akustischen Emissionen und Schall, insbesondere in Form eines Mikrofons, dargestellt, der am Gehäuse 15 angebracht ist. Zur Steuerung des Speisenzubereitungsgeräts 1 und zur Verarbeitung der Sensordaten umfasst das Speisenzubereitungsgerät 1 die Steuerungseinheit 7, die einen Prozessor 11 und einen Speicher 12 umfasst. Wenn detektiert wurde, dass ein vorgegebener Zerkleinerungszustand der Speise 4 während eines Zerkleinerungsvorgangs durch das Werkzeug 5 erreicht ist, kann die Steuerungseinheit 7 über ein Display 18 einen entsprechenden Hinweis an den Benutzer ausgeben und optional den Antrieb für ein Anhalten des Werkzeugs 5 ansteuern.

Die Figur 2 zeigt ein Messdiagramm eines Zerkleinerungsvorgangs zum Zerstoßen von neun Eiswürfeln zum Erhalt von zerstoßenem Eis ungefähr in Hagelkorngröße, was auch Crushed Eis genannt wird. Abgebildet sind die Überwachungsschwelle M1, eine Messkurve $K_s$ des Sensorsignals S und eine Messkurve $K_V$ des aus dem Sensorsignal S berechneten Überwachungswertes V. Die Überwachungsschwelle M1 und der Überwachungswert V sind in der gleichen Einheit der Signalstärke (rechte Skala) aufgetragen. Der Signalwert weist aufgrund der Umrechnung in den Überwachungswert eine andere Einheit der Signalstärke auf (linke Skala). Die Berechnung bzw. Umrechnung erfolgt bevorzugt digital, kann jedoch grundsätzlich auch analog durch eine analoge Schaltung erfolgen. Auf der horizontalen Achse ist die Zeit t in ms aufgetragen. Zwischen 0 ms und 1800 ms ist das Werkzeug angehalten und das Speisenzubereitungsgerät 1 befindet sich im ruhenden Zustand. Das Sensorsignal S, das einer Aufsummierung der einzelnen Sensorsignale der Sensoren 3a, 3b, 3c zur Gewichtsermittlung entsprechen kann, wurde unter Abzug des anfangs gemessenen Gesamtgewichtes des Speisenzubereitungsgerätes 1 inklusive der Speise 4 auf Null gesetzt. Bei 1800 ms wurde das Werkzeug 5 mit einer Geschwindigkeit zwischen 1500 U/min und 5000 U/min in Rotation versetzt. Durch die Werkzeugkollision mit den Eiswürfeln beginnt das Speisenzubereitungsgerätes 1 zu springen und rütteln, so dass die Sensoren 3a, 3b, 3c zur Gewichtsermittlung ausschlagen.

Das Sensorsignal S weist eine entsprechend starke Schwankung auf. Bei 8300 ms sind alle Eiswürfel zerkleinert und das System befindet sich in einem Gleichgewichtszustand. Das Sensorsignal S schwankt nun sichtbar weniger als im Zeitraum zwischen 1800 ms und 8300 ms. Die Schwankungen des Sensorsignal S gehen somit auf ein normales Maß zurück und behalten diese Schwankungsintensität bei. Um den beschriebenen Übergang bei 8300 ms automatisiert auswertbar bzw. überwachbar zu machen, wurde aus dem Sensorsignal S der Überwachungswert V berechnet. In Figur 2 entspricht der Überwachungswert V der gleitenden Varianz bzw. der mitlaufenden Varianz des Sensorsignals S, die sich wie nachfolgend beschrieben berechnet. Zunächst wird der Mittelwert µ der zuvor aufgenommenen Sensorsignale S abgezogen. Insbesondere dient die Gleichung

$$\mu = \frac{\sum S_i}{k}$$

zur Ermittlung des Mittelwertes, wobei k die Anzahl der bisherigen Messwerte repräsentiert. In einer alternativen Ausgestaltung handelt es sich bei dem Mittelwert um einen gleitenden Mittelwert. Durch die Mittelwertbildung kann einer Signaldrift entgegengewirkt werden. Zum Glätten des Überwachungswerts V wird ein Fenster mit vorbestimmter Anzahl F von Werten, bevorzugt 15 Werte, betrachtet. Die letzten F Differenzwerte $\delta_i$ mit dem Messwertindex i, die der Differenz aus dem Sensorsignal S und dem Mittelwert µ entsprechen, d.h. $\delta_i = \mu - S_i$, werden quadriert und aufaddiert, um daraus die Varianz $\sigma^2$ zu bilden. Insbesondere wird die folgende Gleichung zur Ermittlung der Varianz $\sigma_k^2$ eingesetzt:

$$\sigma_k^2 = \sum_{i=k-F}^{k} \delta_i^2 / (F - 1)$$

Der vorgegebene Zerkleinerungszustand ist erreicht, wenn diese Varianz $\sigma^2$ die Überwachungsschwelle M1 unterschreitet und für eine Zeitspanne d unter der Überwachungsschwelle M1 bleibt. Die Zeitdauer d ist insbesondere fest in der Steuerungseinheit 7 hinterlegt und beträgt in diesem Beispiel und insbesondere auch in den folgenden Beispielen 1500 ms. Da der Überwachungswert V die Überwachungsschwelle M1 zwischen 8300 ms und 9800 ms nicht überschritten hat, ermittelt die Steuerungseinheit 7 bei 9800 ms, dass der vorgegebene Zerkleinerungszustand der Speise 4 erreicht ist und hält das Werkzeug 5 automatisch an.

Für diese Überwachung genügt eine Betrachtung einer Kraft in Schwerkraftrichtung auf nur einem Stützelement 6a, 6b, 6c mit dessen integrierten Sensor 3a, 3b, 3c oder des Gesamtsystemgewichts bzw. der Gesamtsystemgewichtskraft in Schwerkraftrichtung auf alle Stützelemente 6a, 6b, 6c mit den jeweils integrierten Sensoren 3a, 3b, 3c, wobei in der letzteren Ausgestaltung eine Einzelauswertung für die einzelnen Sensoren 3a, 3b, 3c beispielsweise in vorhandenen einzelnen Standfüßen nicht nötig ist.

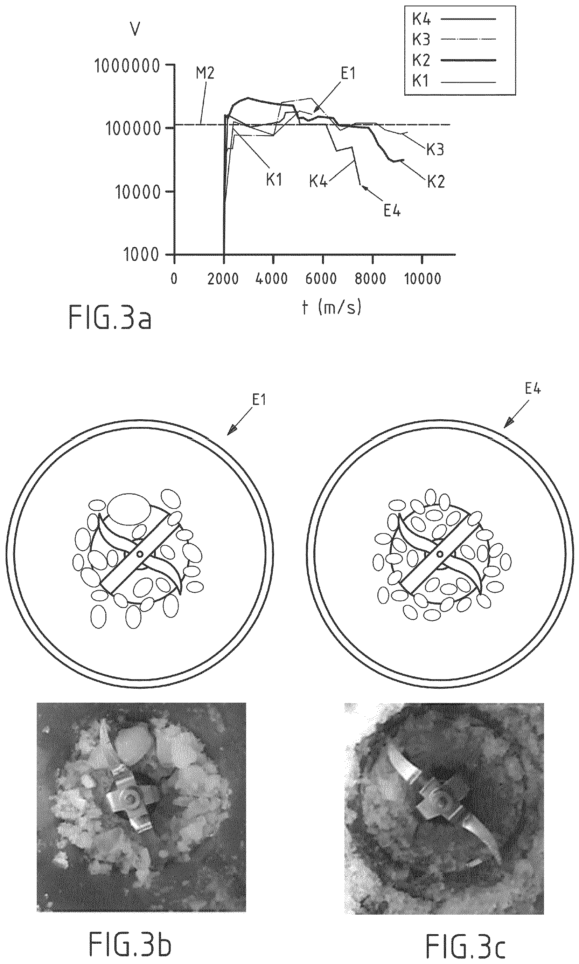

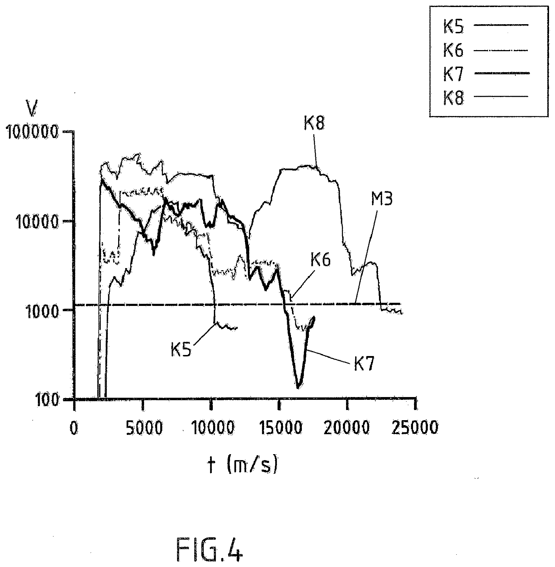

Je nach Rezept kann die Überwachungsschwelle, also der Schwellwert, unterschiedlich unter Berücksichtigung der Speisebestandteile (z.B. Parmesan oder Eis) sowie dem Rezeptziel (z.B. gewünschter Zerkleinerungsgrad, z.B. einstellbar über die Drehstufe) festgelegt werden. Bevorzugt kann die Steuerungseinheit 7 auf die Überwachungsschwelle zugreifen, die durch den Benutzer eingestellt oder durch ein digitales Rezept vorgegeben wurde. Für verschiedene Rezepte kann die Steuerungseinheit 7 somit unterschiedliche Überwachungsschwellen M1, M2, M3 einsetzen. Zum Crushen, also Zerstoßen, von Eis kann die Überwachungsschwelle M1 und M2 der Figuren 2 und 3a von 110.000 Einheiten und zum Zubereiten von Slushie-Eis aus Eiswürfeln wie in Figur 4 die Überwachungsschwelle M3 von 1.400 Einheiten eingesetzt werden. Für das Zubereiten feingemahlener Mandeln hat sich eine Überwachungsschwelle von 1.900 Einheiten bewährt und/oder zum Erhalt feingemahlener getrockneter Erbsen eine Überwachungsschwelle von 330 Einheiten. Jede Überwachungsschwelle M1, M2, M3 kann unabhängig von Menge und Zustand der Speisenbestandteile bzw. Zutaten eingesetzt werden, wie beispielsweise die Figur 3a, 3b, 3c sowie Figur 4 zeigen.

Die Figur 3a zeigt ein Messdiagramm mit einer Überwachungsschwelle M2 und mehreren Messkurven K1, K2, K3, K4 von Überwachungswerten V in Form einer 3s gleitenden Standardabweichung aus verschiedenen Zerkleinerungsvorgängen zur Zubereitung von zerstoßenem Eis aus Eiswürfeln. Bei den Messkurven K2 und K3 wurden jeweils neun Eiswürfel und bei den Messkurven K1 und K4 jeweils sechs Eiswürfel bei gleicher Drehstufe zerkleinert. Bei den Messkurven K2, K3 und K4 wurde bei Ermitteln des Erreichens des vorgegebenen Zerkleinerungszustands durch die Steuerungseinheit 7 nach Unterschreiten des Schwellwertes M2, also nach dem ersten Messpunkt kleiner M2, für die Zeitdauer d das Werkzeug 5 angehalten. Die Proben der Messkurven K2, K3 und K4 wiesen gemäß Sichtprüfung einen im Wesentlichen gleichen Zerkleinerungsgrad auf und entsprachen alle dem gewünschten Zerkleinerungsgrad. Die Figur 3c zeigt ein Foto der Probe der Messkurve K4 nach dem Anhalten des Werkzeugs am Ende E4 der Messkurve K4. Die Proben der Messkurven K2 und K3 sahen vergleichbar mit dem Zubereitungsergebnis der Figur 3c aus. Bei der Messkurve K1 wurde zu Testzwecken der Zerkleinerungsprozess vorzeitig gestoppt, bevor die Steuerungseinheit 7 das Erreichen des vorgegebenen Zerkleinerungszustands ermitteln konnte. Das Foto der Probe bei Stoppen des Werkzeugs im Punkt E1 ist in der Figur 3b gezeigt. Mindestens ein Eisstück wurde übergroß vorgefunden, das nicht wie gewünscht zerkleinert war. Der Kurvenverlauf der Messkurve K1 zeigt, dass die Messkurve K1 kurzzeitig unter die Überwachungsschwelle M2 gefallen war, jedoch kürzer als die vorgegebene Zeitdauer d, so dass die Steuerungseinheit 7 das Werkzeug 5 nicht anhielt. Innerhalb dieses kurzzeitigen Zeitraums war das übergroße Eisstück vorübergehend außer Reichweite der Klinge des Werkzeugs 5. Bei den Messkurven K1, K2, K3 und K4 wurde das Werkzeug 5 mit einer konstanten Soll-Drehzahl von mindestens 1500 U/min und/oder höchstens 5000 U/min angetrieben.

Die Figur 4 zeigt ein Messdiagramm mit einer Überwachungsschwelle M3 und mehreren Messkurven K5, K6, K7, K8 von Überwachungswerten V aus verschiedenen Zerkleinerungsvorgängen zur Zubereitung von Slushie-Eis aus Eiswürfeln. Bei den Messkurven K5 und K6 wurden jeweils sechs Eiswürfel, bei der Messkurve K7 neun Eiswürfel und bei der Messkurve K8 fünfzehn Eiswürfel stets bei gleicher Drehstufe zerkleinert. Bei allen Messkurven K5, K6, K7, K8 wurde bei Ermitteln des Erreichens des vorgegebenen Zerkleinerungszustands durch die Steuerungseinheit 7 nach Unterschreiten des Schwellwertes M3 für die Zeitdauer d das Werkzeug 5 angehalten. Die Proben dieser Messkurven K5, K6, K7, K8 wiesen gemäß Sichtprüfung einen im Wesentlichen gleichen Zerkleinerungsgrad auf und entsprachen alle dem gewünschten Zerkleinerungsgrad. Bei den Messkurven K5, K6, K7 und K8 wurde das Werkzeug 5 mit einer konstanten Soll-Drehzahl von ungefähr 10.000 U/min angetrieben. Der Überwachungswert V ist wie bei Figur 3a eine 3s gleitende Standardabweichung des Sensorsignals aus der Summe der Sensoren 3a, 3b, 3c. Die Eiswürfel hatten dabei ein Gewicht von ca. 30g.

Wie die Figuren 3a, 3b, 3c und 4 zeigen, konnte der zeitliche Endpunkt eines Zerkleinerungsvorgangs mit dem jeweils gewünschten Zerkleinerungszustand trotz unterschiedlicher Eingangsqualitäten oder Prozessparameter durch die Steuerungseinheit 7 zuverlässig und präzise ermittelt werden. Der Endpunkt der Zerkleinerung bzw. der Zeitpunkt des Erreichens des gewünschten Zerkleinerungszustands der Speise kann unabhängig von Menge und Zustand der Speisenbestandteile erfolgen, also z.B. bei den Eiswürfeln oder bei tiefgefrorenem Obst zum Zubereiten von Eiscreme für verschiedene Größen, Gefriergrad und Anzahl. Der Zerkleinerungsgrad bzw. Mahlgrad kann dabei weiterhin wie üblich größtenteils über die Drehstufe bestimmt und z.B. vom Benutzer eingestellt werden. Die Zerkleinerungszeit kann während des Zerkleinerungsvorgangs an die tatsächlichen Gegebenheiten angepasst werden. Die Spring- oder Rüttelbewegung durch die abrupten Impulse bleiben bestehen, solange sich während des Zerkleinerungsvorgangs noch größere Stücke im Speisenzubereitungsgefäß befinden. Der Zerkleinerungsvorgang kann genau zu der Zeit abgebrochen werden, zu dem alle großen Stücke zerschlagen sind.

**Patentansprüche**

1. Speisenzubereitungsgerät (1) mit einem Speisenzubereitungsgefäß (2), einem drehbaren Werkzeug (5) und einem Sensor (3a, 3b, 3c, 13) insbesondere zur Gewichtsermittlung einer Speise (4) in dem Speisenzubereitungsgefäß (2), **dadurch gekennzeichnet, dass** das Werkzeug (5) ein Mixmesser ist und eine Steuerungseinheit (7) vorgesehen und so eingerichtet ist, dass beim Zerkleinern einer Speise (4) in dem Speisenzubereitungsgefäß (2) durch das Mixmesser die Steuerungseinheit (7) auf Basis eines Sensorsignals (S) des Sensors ermittelt, ob ein vorgegebener Zerkleinerungszustand der Speise (4) erreicht ist.

2. Speisenzubereitungsgerät (1) nach dem vorhergehenden Anspruch, **dadurch gekennzeichnet, dass** die Steuerungseinheit (7) so eingerichtet ist, dass ein Hinweis an den Benutzer ausgegeben wird und/oder ein Prozessparameter zur Speisenzubereitung automatisch angepasst wird, wenn die Steuerungseinheit (7) auf Basis des Sensorsignals (S) ermittelt hat, dass ein vorgegebener Zerkleinerungszustand der Speise (4) erreicht ist.

3. Speisenzubereitungsgerät (1) nach einem der vorhergehenden Ansprüche, **dadurch gekennzeichnet, dass** die Steuerungseinheit (7) so eingerichtet ist, dass das Werkzeug (5) automatisch angehalten wird, wenn die Steuerungseinheit (7) auf Basis des Sensorsignals (S) ermittelt hat, dass ein vorgegebener Zerkleinerungszustand der Speise (4) erreicht ist.

4. Speisenzubereitungsgerät (1) nach einem der vorhergehenden Ansprüche, **dadurch gekennzeichnet, dass** der vorgegebene Zerkleinerungszustand durch eine Überwachungsschwelle (M1, M2, M3) definiert ist.

5. Speisenzubereitungsgerät (1) nach dem vorhergehenden Anspruch, **dadurch gekennzeichnet, dass** die Steuerungseinheit (7) so eingerichtet ist, dass die Überwachungsschwelle (M1, M2, M3) in Abhängigkeit von einem gewählten Rezept vorgegeben wird.

6. Speisenzubereitungsgerät (1) nach einem der vorhergehenden Ansprüche, **dadurch gekennzeichnet, dass** die Steuerungseinheit (7) so eingerichtet ist, dass beim Zerkleinern einer Speise (4) durch das Werkzeug (5) die Steuerungseinheit (7) auf Basis eines Überwachungswertes (V) ermittelt, ob ein vorgegebener Zerkleinerungszustand der Speise (4) erreicht ist.

7. Speisenzubereitungsgerät (1) nach dem vorhergehenden Anspruch, **dadurch gekennzeichnet, dass** das Sensorsignal (S) der Überwachungswert (V) ist.

8. Speisenzubereitungsgerät (1) nach einem der zwei vorhergehenden Ansprüche, **dadurch gekennzeichnet, dass** die Steuerungseinheit (7) so eingerichtet ist, dass die Steuerungseinheit (7) auf Basis des Sensorsignals (S) nur eines Sensors (3a, 3b, 3c, 13) oder der Sensorsignale (S) mehrerer Sensoren (3a, 3b, 3c, 13) den Überwachungswert (V) berechnet.

9. Speisenzubereitungsgerät (1) nach einem der drei vorhergehenden Ansprüche, **dadurch gekennzeichnet, dass** der Überwachungswert (V) ein Streuungsmaß ist, insbesondere ein mitlaufendes Streuungsmaß.

10. Speisenzubereitungsgerät (1) nach einem der vier vorhergehenden Ansprüche, **dadurch gekennzeichnet, dass** der Überwachungswert ein Gewichtswert mit einer Information über das Gewicht einer Speise (4) in dem Speisenzubereitungsgefäß (2) ist.

11. Speisenzubereitungsgerät (1) nach einem der fünf vorhergehenden Ansprüche sowie Anspruch 4 oder 5, **dadurch gekennzeichnet, dass** die Steuerungseinheit (7) so eingerichtet ist, dass die Steuerungseinheit (7) ermittelt, dass der vorgegebene Zerkleinerungszustand der Speise (4) erreicht ist, wenn der Überwachungswert (V) die Überwachungsschwelle (M) erreicht.

12. Speisenzubereitungsgerät (1) nach einem der sechs vorhergehenden Ansprüche sowie Anspruch 4 oder 5, **dadurch gekennzeichnet, dass** die Steuerungseinheit (7) so eingerichtet ist, dass die Steuerungseinheit (7) ermittelt, dass der vorgegebene Zerkleinerungszustand der Speise (4) erreicht ist, wenn der Überwachungswert (V) die Überwachungsschwelle (M) unterschreitet und anschließend für eine vorgegebene Zeitdauer (d) unterhalb der Überwachungsschwelle (M) bleibt.

13. Speisenzubereitungsgerät (1) nach einem der vorhergehenden Ansprüche, **dadurch gekennzeichnet, dass** der mindestens eine Sensor (3a, 3b, 3c) in einem Stützelement (6a, 6b, 6c) zum Tragen des Gewichts des Speisenzubereitungsgefäßes (2) angeordnet ist.

14. Verfahren zum Zubereiten einer Speise (4) in einem Speisenzubereitungsgefäß (2) eines Speisenzubereitungsgeräts (1), wobei durch einen Sensor (3a, 3b, 3c, 13) insbesondere zur Gewichtsermittlung der Speise (4) in dem Speisenzubereitungsgefäß (2) ein Sensorsignal (S) an eine Steuerungseinheit (7) des Speisenzubereitungsgeräts (1) übermittelt wird, **gekennzeichnet durch** die folgenden Schritte:

    - Zerkleinern einer Speise (4) **durch** das Werkzeug (5), das ein Mixmesser ist, und
    - Detektieren eines vorgegebenen Zerkleinerungszustands der Speise (4) in dem Speisenzubereitungsgefäß (2) während dessen Zerkleinerung **durch** das Mixmesser, indem die Steuerungseinheit (7) auf Basis des Sensorsignals (S) ermittelt, ob der vorgegebene Zerkleinerungszustand der Speise (4) erreicht ist.

**15.** Computerprogrammprodukt, umfassend Befehle, die bei der Ausführung des Programms durch eine Steuerungseinheit (7) diese dazu veranlassen, die Schritte des Verfahrens nach dem vorhergehenden Anspruch auszuführen.

**Claims**

**1.** Food preparation apparatus (1) comprising a food preparation vessel (2), a rotatable too! (5) and a sensor (3a, 3b, 3c, 13), in particular for determining the weight of a food (4) in the food preparation vessel (2), **characterized in in that** the tool (5) is a mixing knife and a control unit (7) is provided and configured such that, when a food (4) is chopped in the food preparation vessel (2) by the mixing knife, the control unit (7) determines, on the basis of a sensor signal (S) of the sensor, whether a predetermined chopping state of the food (4) has been reached.

**2.** Food preparation apparatus (1) according to the preceding claim, **characterized in that** the control unit (7) is configured such that an indication to the user is given and/or a process parameter for food preparation is automatically adapted when the control unit (7) has determined on the basis of the sensor signal (S) that a predetermined chopping state of the food (4) has been reached.

**3.** Food preparation apparatus (1) according to one of the preceding claims, **characterized in that** the control unit (7) is configured such that the tool (5) is automatically stopped when the control unit (7) has determined on the basis of the sensor signal (S) that a predetermined chopping state of the food (4) has been reached.

**4.** Food preparation apparatus (1) according to one of the preceding claims, **characterized in that** the predetermined chopping state is defined by a monitoring threshold (M1, M2, M3).

**5.** Food preparation apparatus (1) according to the preceding claim, **characterized in that** the control unit (7) is configured such that the monitoring threshold (M1, M2, M3) is predetermined in dependence on a selected recipe.

**6.** Food preparation apparatus (1) according to one of the preceding claims, **characterized in that** the control unit (7) is configured such that when a food (4) is chopped by the tool (5) the control unit (7) determines on the basis of a monitoring value (V) whether a predetermined chopping state of the food (4) has been reached.

**7.** Food preparation apparatus (1) according to the preceding claim, **characterized in that** the sensor signal (S) is the monitoring value (V).

**8.** Food preparation apparatus (1) according to one of the two preceding claims, **characterized in that** the control unit (7) is configured such that the control unit (7) calculates the monitoring value (V) on the basis of the sensor signal (S) of only one sensor (3a, 3b, 3c, 13) or the sensor signals (S) of several sensors (3a, 3b, 3c, 13).

**9.** Food preparation apparatus (1) according to one of the three preceding claims, **characterized in that** the monitoring value (V) is a dispersion measure, in particular a moving dispersion measure.

**10.** Food preparation apparatus (1) according to one of the four preceding claims, **characterized in that** the monitoring value is a weight value with information about the weight of a food (4) in the food preparation vessel (2).

**11.** Food preparation apparatus (1) according to one of the five preceding claims and claim 4 or 5, **characterized in that** the control unit (7) is configured such that the control unit (7) determines that the predetermined chopping state of the food (4) has been reached when the monitoring value (V) reaches the monitoring threshold (M).

**12.** Food preparation apparatus (1) according to one of the six preceding claims and claim 4 or 5, **characterized in that** the control unit (7) is configured such that the control unit (7) determines that the predetermined chopping state of the food (4) has been reached when the monitoring value (V) falls below the monitoring threshold (M) and subsequently remains below the monitoring threshold (M) for a predetermined period of time (d).

**13.** Food preparation apparatus (1) according to one of the preceding claims, **characterized in that** the at least one sensor (3a, 3b, 3c) is arranged in a supporting element (6a, 6b, 6c) for carrying the weight of the food preparation vessel (2).

**14.** Method for preparing a food (4) in a food preparation vessel (2) of a food preparation apparatus (1), wherein a sensor signal (S) is transmitted by a sensor (3a, 3b, 3c, 13), in particular for determining the weight of the food (4) in the food preparation vessel (2), to a control unit (7) of the food preparation apparatus (1), **characterized by** the following steps:

- Chopping of a food (4) by the tool (5), which is a mixing knife, and
- Detecting a predetermined chopping state of the food (4) in the food preparation vessel (2) during its chopping by the mixing knife, in that the control unit (7) determines on the basis of the sensor signal (S) whether the predetermined chopping state of the food (4) has been reached.

15. Computer program product comprising instructions which, when the program is executed by a control unit (7), cause the latter to carry out the steps of the method according to the preceding claim.

**Revendications**

1. Appareil de préparation d'aliments (1) comprenant un récipient de préparation d'aliments (2), un outil rotatif (5) et un capteur (3a, 3b, 3c, 13), en particulier pour déterminer le poids d'un aliment (4) dans le récipient de préparation d'aliments (2), **caractérisé en ce que** le capteur (3a, 3b, 3c, 13) est disposé dans le récipient de préparation d'aliments (2), **en ce que** l'outil (5) est un couteau mélangeur et qu'une unité de commande (7) est prévue et disposée de telle sorte que, lorsqu'un aliment (4) est broyé dans le récipient de préparation d'aliments (2) par le couteau mélangeur, l'unité de commande (7) détermine, sur la base d'un signal (S) du capteur, si un état de broyage prédéterminé de l'aliment (4) a été atteint.

2. Appareil de préparation d'aliments (1) selon la revendication précédente, **caractérisé en ce que** l'unité de commande (7) est configurée de telle sorte qu'une indication est délivrée à l'utilisateur et/ou un paramètre de processus pour la préparation d'aliments est automatiquement ajusté si l'unité de commande (7) a déterminé sur la base du signal du capteur (S) qu'un état de broyage prédéterminé de l'aliment (4) a été atteint.

3. Appareil de préparation d'aliments (1) selon l'une des revendications précédentes, **caractérisé en ce que** l'unité de commande (7) est agencée pour arrêter automatiquement l'outil (5) lorsque l'unité de commande (7) a déterminé sur la base du signal du capteur (S) qu'un état de broyage prédéterminé de l'aliment (4) a été atteint.

4. Appareil de préparation d'aliments (1) selon l'une des revendications précédentes, **caractérisé en ce que** l'état de broyage prédéterminé est défini par un seuil de surveillance (M1, M2, M3).

5. Appareil de préparation d'aliments (1) selon l'une des revendications précédentes, **caractérisé en ce que** l'unité de commande (7) est configurée de telle sorte que le seuil de surveillance (M1, M2, M3) est prédéfini en fonction d'une recette sélectionnée.

6. Appareil de préparation d'aliments (1) selon l'une des revendications précédentes, **caractérisé en ce que** l'unité de commande (7) est disposée de telle sorte que, lorsqu'un aliment (4) est broyée par l'outil (5), l'unité de commande (7) détermine, sur la base d'une valeur de contrôle (V), si un état de broyage prédéterminé de l'aliment (4) a été atteint.

7. Appareil de préparation d'aliments (1) selon la revendication précédente, **caractérisé en ce que** le signal du capteur (S) est la valeur de surveillance (V).

8. Appareil de préparation d'aliments (1) selon l'une des deux revendications précédentes, **caractérisé en ce que** l'unité de commande (7) est disposée de telle sorte que l'unité de commande (7) calcule la valeur de surveillance (V) sur la base du signal de capteur (S) d'un seul capteur (3a, 3b, 3c, 13) ou des signaux de capteur (S) de plusieurs capteurs (3a, 3b, 3c, 13).

9. Appareil de préparation d'aliments (1) selon l'une des trois revendications précédentes, **caractérisé en ce que** la valeur de surveillance (V) est une mesure de dispersion, en particulier une mesure de dispersion de suivi.

10. Appareil de préparation d'aliments (1) selon l'une des quatre revendications précédentes, **caractérisé en ce que** la valeur de surveillance est une valeur de poids avec des informations sur le poids d'un aliment (4) dans le récipient de préparation d'aliments (2).

11. Appareil de préparation d'aliments (1) selon l'une des cinq revendications précédentes et la revendication 4 ou 5, **caractérisé en ce que** l'unité de commande (7) est disposée de telle sorte que l'unité de commande (7) détermine que l'état de broyage prédéterminé de l'aliment (4) est atteint lorsque la valeur de surveillance (V) atteint le seuil de surveillance (M).

12. Appareil de préparation d'aliments (1) selon l'une des six revendications précédentes et la revendication 4 ou 5, **caractérisé en ce que** l'unité de commande (7) est réglée de telle sorte que l'unité de commande (7) détermine que l'état de broyage prédéterminé de l'aliment (4) est atteint lorsque la valeur de surveillance (V) tombe en dessous du seuil de surveillance (M) et reste ensuite en dessous du seuil de surveillance (M) pendant une période de temps prédéterminée (d).

13. Appareil de préparation d'aliments (1) selon l'une des revendications précédentes, **caractérisé en ce que** le au moins un capteur (3a, 3b, 3c) est disposé dans un élément de support (6a, 6b, 6c) pour supporter le poids du récipient de préparation d'aliments (2).

**14.** Procédé de préparation d'un aliment (4) dans un récipient de préparation d'aliments (2) d'un appareil de préparation d'aliments (1), dans lequel un signal de capteur (S) est transmis par un capteur (3a, 3b, 3c, 13), en particulier pour déterminer le poids de l'aliment (4) dans le récipient de préparation d'aliments (2), à une unité de commande (7) de l'appareil de préparation d'aliments (1), **caractérisé par** les étapes suivantes :

   - le broyage d'un aliment (4) par l'outil (5) qui est un couteau mélangeur, et
   - la détection d'un état de broyage prédéterminé des aliments (4) dans le récipient de préparation d'aliments (2) pendant leur broyage par le couteau mélangeur, par l'unité de commande (7) déterminant si l'état de broyage prédéterminé des aliments (4) a été atteint sur la base du signal du capteur (S).

**15.** Produit de programme informatique comprenant des instructions qui, lorsque le programme est exécuté par une unité de commande (7), font en sorte que celle-ci exécute les étapes du procédé selon la revendication précédente.

FIG.1

FIG.2

FIG.3a

FIG.3b

FIG.3c

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2330955 A1
- DE 102016110710 A1
- DE 102013106691 A1